# FASCICULE DE BREVET EUROPEEN

(11) **EP 1 703 188 B1**
(45) Date de publication et mention de la délivrance du brevet: **10.10.2007**
(21) Numéro de dépôt: 06111078.9
(22) Date de dépôt: 14.03.2006
(51) Int. Cl.: F16L 3/16, H02G 3/32, F16L 3/13

(54) **Collier de maintien**
Halteschelle
Fixing clamp

(30) Priorité: 18.03.2005 FR 0502695
(43) Date de publication de la demande: 20.09.2006
(73) Titulaire: HISPANO-SUIZA, 92700 Colombes (FR)
(72) Inventeur: Ferragut, Eric, 91590 D'Huison-Longueville (FR); Mazelle, Christian, 91400 Saclay (FR); Pelisson, Pascal, 77820 Le Chatelet en Brie (FR)
(74) Mandataire: Barbin le Bourhis, Joël

(56) Documents cités:
- DE-A1- 2 353 619
- DE-U- 7 932 188
- US-A- 2 998 217
- US-A- 3 561 078
- PATENT ABSTRACTS OF JAPAN vol. 1999, no. 04, 30 avril 1999 (1999-04-30) & JP 11 013942 A (PIOLAX INC; TOYOTA MOTOR CORP), 22 janvier 1999 (1999-01-22)

## Description

Selon le préambule de la revendication indépendante 1, l'invention concerne un collier de maintien d'un élément, tel qu'un câble ou un conduit, sur un support. Un tel collier est divulgué par le document DE-U-7932188 et peut être utilisé, par exemple, pour maintenir un ou plusieurs câbles électriques, ou une conduite de transport de fluide.

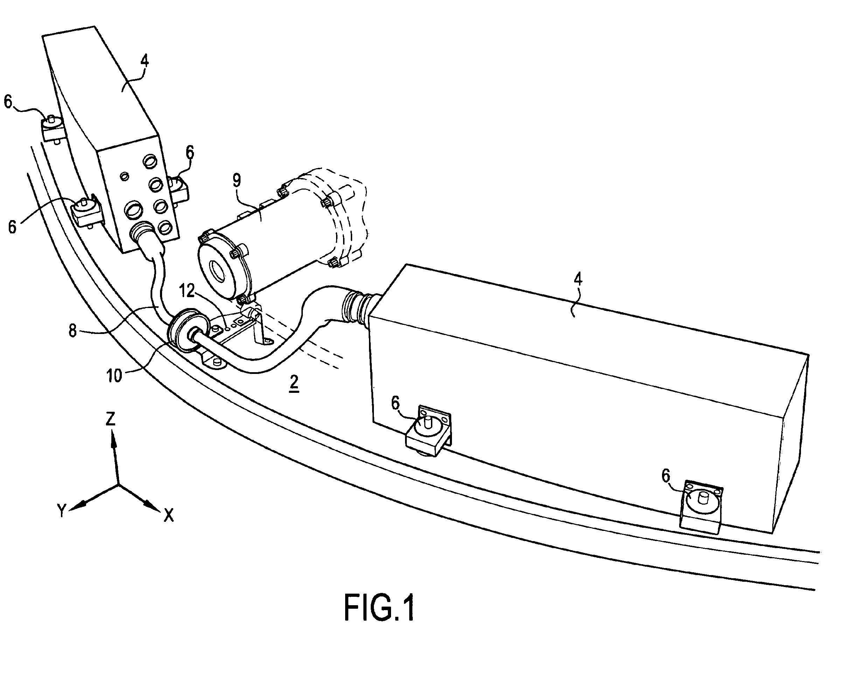

Plus particulièrement, comme illustré sur la figure 1, un tel collier peut être utilisé dans un moteur d'avion pour fixer à l'intérieur du carter de la nacelle les câbles électriques reliant le module de puissance et le module de calcul des inverseurs de poussée utilisés lors de l'atterrissage de l'avion, pour freiner celui-ci.

Concrètement, ces modules sont deux boîtiers 4 très lourds (généralement plus de 14 kg chacun) séparés de quelques dizaines de centimètres et montés sur des amortisseurs 6 à l'intérieur du carter de nacelle 2. Les amortisseurs 6 autorisent un déplacement des boîtiers 4 par rapport au carter 2, d'une amplitude de quelques millimètres (entre 5 et 10 mm) suivant toutes les directions.

Les câbles électriques reliant ces boîtiers 4 sont regroupés à l'intérieur d'un harnais 8 de quelques dizaines de millimètres de diamètre, qui contourne généralement des éléments de l'inverseur de poussée (un vérin 9 dans l'exemple représenté). Comme on ne peut pas laisser le harnais 8 libre de se mouvoir à l'intérieur du carter 2 (risque d'endommagement de celui-ci ou des éléments environnants, de déconnexion...), on a recours a un collier de maintien.

Or, les boîtiers 4 en se déplaçant indépendamment l'un de l'autre, exercent sur le harnais des forces susceptibles d'être orientées suivant n'importe quelle direction de l'espace X, Y et Z, c'est-à-dire aussi bien axialement suivant la direction X que radialement suivant les directions Y et Z.

Les colliers de maintien utilisés à ce jour sont formés par une bride de serrage passée autour du harnais et fixée au carter. Ces colliers se révèlent inadaptés car ils empêchent tout mouvement du harnais, ce qui, d'une part, entrave la liberté de mouvement des boîtiers et, d'autre part, induit des contraintes significatives susceptibles d'endommager le harnais, au niveau de la bride de serrage.

L'invention a pour but de proposer un collier de maintien assurant le maintien du harnais tout en autorisant des petits déplacements de celui-ci, suivant toutes les directions de l'espace.

Pour atteindre ce but, l'invention a pour objet un collier de maintien d'un élément tel qu'un câble ou un conduit, comprenant une bride apte à être fixée sur un support, un manchon extérieur entouré par cette bride, un manchon intérieur susceptible d'être traversé par ledit élément et un voile déformable reüant les manchons intérieur et extérieur et autorisant le déplacement du manchon intérieur par rapport au manchon extérieur, ce voile étant formé par deux membranes annulaires réunies au niveau du manchon extérieur, qui divergent en s'écartant de celui-ci.

Un tel collier de maintien peut être utilisé pour fixer un élément comme le harnais précédemment décrit ou être utilisé à d'autres fins.

Grâce au caractère déformable du voile, le manchon intérieur et l'élément (câble ou conduit) qui le traverse sont libres d'effectuer des déplacements limités (en terme d'amplitude), suivant n'importe quelle direction. Le manchon intérieur assure donc une fonction de guidage multidirectionnel dudit élément.

Ledit élément est, de préférence, solidarisé au manchon intérieur par tout moyen de fixation approprié, par exemple par collage ou, selon un mode de réalisation particulier, à l'aide d'au moins un collier de serrage que l'on serre autour du manchon intérieur et dudit élément.

Avantageusement, le voile est détendu de manière à présenter du mou lorsque le collier de maintien est au repos, c'est-à-dire lorsque l'élément maintenu reste dans sa position initiale. En d'autres termes, le voile est conformé pour présenter des déformations (courbure(s) ou pliage(s)) lui conférant une élasticité de forme. Ainsi, le voile peut se déformer en se déployant lors du déplacement du manchon intérieur. Selon un exemple de réalisation, les membranes formant le voile sont courbes et, lors du déplacement du manchon intérieur, une membrane se tend (i.e. son rayon de courbure augmente) tandis que l'autre membrane se plie (i.e. son rayon de courbure diminue).

Avantageusement encore, le voile est réalisé en un matériau élastique. Le voile présente ainsi une élasticité dite intrinsèque, par opposition à l'élasticité de forme précitée.

Lorsque le voile présente ces deux types d'élasticité, lors d'un mouvement du manchon intérieur de faible amplitude, il se déforme en sollicitant son élasticité de forme, à dire sans contraintes internes. Lors d'un mouvement du manchon intérieur d'amplitude plus importante, le voile s'étend d'abord au maximum (élasticité de forme), puis s'étire élastiquement en sollicitant son élasticité intrinsèque.

Ainsi, l'élasticité intrinsèque du voile n'est pas nécessairement sollicitée, ce qui permet d'augmenter la durée de vie du voile et, par là même, celle du collier de maintien.

Selon un mode de réalisation, lesdites membranes annulaires se prolongent en entourant le manchon intérieur.

Selon un autre mode de réalisation lesdites membranes annulaires se prolongent pour former le manchon intérieur.

Selon un mode de réalisation particulier, le manchon extérieur, le voile et le manchon intérieur sont formés en une seule pièce. Cette pièce est avantageusement en un matériau de la famille des élastomères, par exemple en fluorosilicone, et peut être obtenue par moulage.

L'association du manchon intérieur, du manchon extérieur et du voile en une unique pièce centrale permet d'éviter le risque de désolidarisation de ces éléments. Ceci permet également de réduire le coût de fabrication du collier.

L'invention et ses avantages seront mieux compris à la lecture de la description détaillée qui suit, d'un exemple de réalisation du collier de l'invention. Cette description fait référence aux figures annexées, sur lesquelles :
- la figure 1 montre un exemple d'utilisation d'un collier de maintien selon l'invention ;
- la figure 2 est une vue en perspective d'un exemple de collier de maintien selon l'invention ;
- la figure 3 est une coupe selon le plan III-III du collier de la figure 2 ;
- la figure 4 est une vue de face selon la flèche IV de la pièce centrale du collier de l'invention;
- la figure 5 est une coupe selon le plan V-V de la pièce centrale de la figure 4 ; et
- la figure 6 est une vue latérale selon la flèche VI de la pièce centrale de la figure 4.

La figure 1 représente une installation comprenant deux boîtiers 4 reliés par un harnais 8. Cette installation est décrite plus haut. Le harnais 8 est maintenu à l'aide d'un collier de maintien 10 selon l'invention, sur un support 12 (solidaire du carter 2) auquel est fixé le collier 10. Bien entendu, le collier 10 pourrait, selon un autre mode de réalisation, être fixé directement sur une paroi du carter 2.

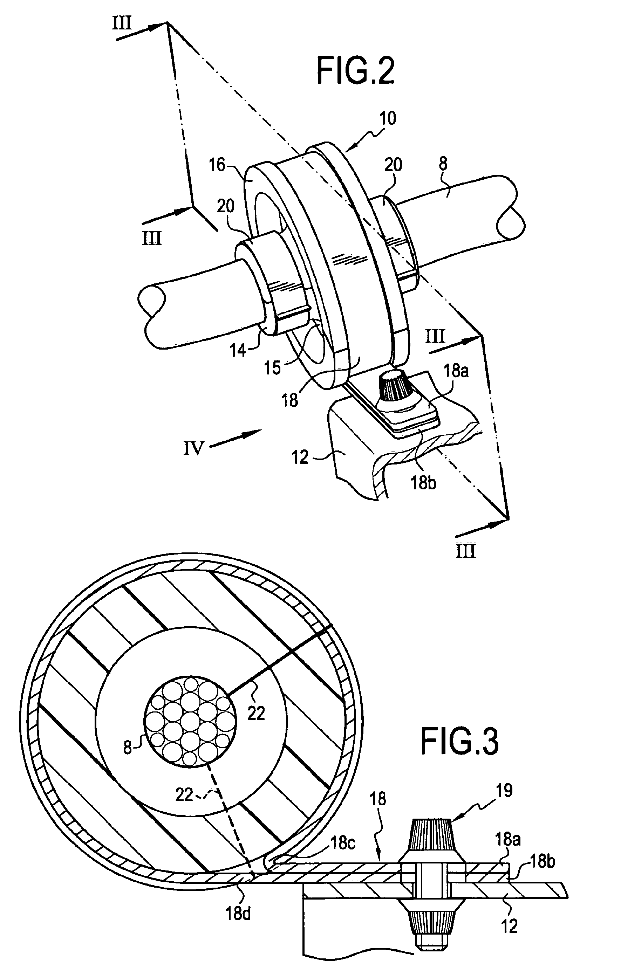

En référence aux figures 2 et 3, le collier de maintien 10 comprend un manchon intérieur 14 traversé par le harnais 8, le diamètre intérieur du manchon 14 correspondant sensiblement au diamètre extérieur du harnais 8. Un manchon extérieur 16 entoure le manchon intérieur 14 et un voile 15 relie ces deux manchons.

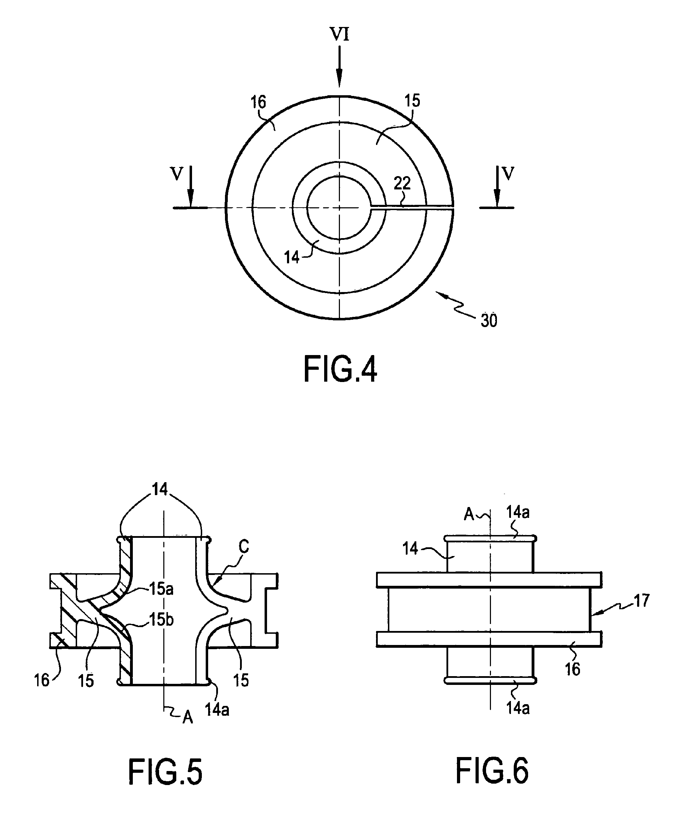

Le manchon extérieur 16 présente sur sa face extérieure une rainure 17 (voir figure 6) pour loger une bride de montage 18 qui entoure le manchon 16. Cette bride 18 présente à ses extrémités deux branches 18a, 18b que l'on rapproche l'une de l'autre pour fermer la bride 18.

La bride 18 est préformée pour épouser sensiblement toute la périphérie extérieure du manchon extérieur, comme représenté figure 3. En d'autres termes, lorsque la bride est fermée, les bases des branches 18a et 18b sont amenées sensiblement au contact l'une de l'autre. De préférence, les bases des branches sont réellement en contact mais, compte tenu de l'orientation des branches 18a et 18b et de la forme de leurs bases, un jeu minime par rapport à la circonférence du manchon extérieur, mais non nul, peut subsister entre les bases des branches.

Dans l'exemple de la figure 3, la base d'une des branches 18a est matérialisée par une pliure 18c. Cette pliure 18c est amenée sensiblement au contact de la base 18d de l'autre branche 18b, matérialisée par une discontinuité du rayon de courbure de la bride.

La forme particulière de la bride 18 préformée permet à celle-ci d'être au contact de toute la périphérie extérieure du manchon extérieur 16 et, ainsi, d'éviter que celui-ci ne déjante. Ceci est particulièrement intéressant lorsque le manchon extérieur présente une fente radiale, comme nous le verrons plus loin, qui favorise le déjantage.

La bride 18 est fixée au support 12 au niveau de ses branches 18a, 18b, à l'aide d'un ensemble vis/écrou 19 qui traverse des ouvertures ménagées dans ces branches. L'ensemble 19 assure également la fermeture de la bride 18.

Le harnais 8 peut être solidarisé au manchon intérieur 14 à l'aide de tout moyen de fixation approprié. Par exemple, on utilise au moins un collier de serrage 20 que l'on serre autour du manchon intérieur 14 et du harnais 8. La pression du collier 20 s'exerce ainsi indirectement sur le harnais par l'intermédiaire du manchon 14 qui, avantageusement, présente une certaine élasticité, ce qui permet de ne pas endommager le harnais 8.

Dans l'exemple, deux colliers de serrage 20 sont placés à chaque extrémité du manchon intérieur 14 et sont retenus par une lèvre 14a formée à chacune de ces extrémités. Ces colliers de serrage 20 sont choisis parmi les différents types existants.

On va maintenant décrire en référence aux figures 4 à 6 un mode particulier de réalisation du manchon intérieur 14, du manchon extérieur 16 et du voile 15, selon lequel ces trois éléments sont formés en une seule pièce, ci-après dénommée pièce centrale 30 du collier.

La pièce centrale 30 peut être réalisée facilement et à faible coût par moulage et, avantageusement, elle est réalisée en un matériau élastomère comme un fluorosilicone ou du caoutchouc. Dans le cas d'un fluorosilicone, on peut choisir pour celui-ci une dureté Shore A, comprise entre 40 et 80, de préférence voisine de 60. Ces valeurs se révèlent bien adaptées pour une utilisation du collier de maintien dans une installation comme celle représentée sur la figure 1.

La pièce centrale 30 présente une symétrie de révolution autour de l'axe A commun aux manchons cylindriques intérieur 14 et extérieur 16. Elle présente en outre une fente 22 qui s'étend depuis l'intérieur du manchon intérieur 14 jusqu'à l'extérieur du manchon extérieur 16. Cette fente 22 est généralement radiale (i.e. perpendiculaire à l'axe A).

La fente 22 permet d'ouvrir la pièce centrale 30 pour la disposer autour du câble ou du conduit qu'elle va entourer. Ainsi, il n'est pas nécessaire de détacher le câble ou le conduit pour le faire passer à l'intérieur du manchon intérieur 14 lors de l'installation ou du remplacement du collier 10. En revanche, cette fente 22 facilite le déjantage de la pièce centrale 30 hors de la bride 18, en particulier lorsqu'elle se trouve au niveau des branches 18a, 18b de cette bride, comme représenté en pointillés sur la figure 3. Pour éviter cet inconvénient, on utilise une bride 18 préformée pour épouser sensiblement toute la périphérie extérieure du manchon extérieur L6, comme expliqué plus haut.

On va maintenant décrire le mode de réalisation du voile 15 représenté sur la figure 5. Le voile 15 est formé par deux membranes annulaires 15a et 15b réunies au niveau du manchon extérieur 16 qui divergent en s'écartant de celui-ci, et qui se prolongent pour former le manchon intérieur 14. Selon un autre mode de réalisation, non représenté, selon lequel le manchon 14 est une pièce distincte du voile 15, les membranes 15a et 15b se prolongent en entourant le manchon 14.

Ainsi, la section radiale du voile 15, représentée à gauche sur la figure 5, a sensiblement la forme d'un Y dont la base est solidaire du manchon extérieur 16 et dont les branches s'écartent et se prolongent pour se confondre avec le manchon intérieur 14 (ou entourer celui-ci).

En outre, avantageusement, les branches 15a et 15b divergent avec une certaine courbure C de sorte que chaque membrane 15a et 15b est détendue lorsque le collier de maintien est au repos. Cette forme particulière permet d'obtenir l'élasticité de forme souhaitée pour le voile 15.

## Revendications

1. Collier de maintien (10) d'un élément (8) tel qu'un câble ou un conduit, comprenant une bride (18) apte à être fixée sur un support (12), un manchon extérieur (16) entouré par cette bride (18), un manchon intérieur (14) susceptible d'être traversé par ledit élément (8) et un voile déformable (15) reliant lesdits manchons (14, 16) et autorisant le déplacement du manchon intérieur (14) par rapport au manchon extérieur (16) **caractérisé en ce que** le voile (15) est formé par deux membranes annulaires (15a, 15b) réunies au niveau du manchon extérieur (16), qui divergent en s'écartant de celui-ci.

2. Collier de maintien selon la revendication 1, **caractérisé en ce que** lesdites membranes annulaires (15a, 15b) se prolongent pour former le manchon intérieur (14).

3. Collier de maintien selon la revendication 1, **caractérisé en ce que** lesdites membranes annulaires (15a, 15b) se prolongent en entourant le manchon intérieur (14).

4. Collier de maintien selon l'une quelconque des revendications précédentes, **caractérisé en ce qu**'il comprend, en outre, au moins un collier de serrage (20) apte à être serré autour du manchon intérieur (14).

5. Collier de maintien (10) selon l'une quelconque des revendications précédentes, **caractérisé en ce que** le voile (15) est détendu, lorsque le collier de maintien (10) est au repos.

6. Collier de maintien (10) selon l'une quelconque des revendications précédentes, **caractérisé en ce que** le voile (15) est réalisé en un matériau élastique.

7. Collier de maintien (10) selon l'une quelconque des revendications précédentes, **caractérisé en ce qu'**une rainure (17) est ménagée sur la face extérieure du manchon extérieur (16) pour loger ladite bride (18).

8. Collier de maintien (10) selon l'une quelconque des revendications 1, 2, 4 à 7, **caractérisé en ce que** le manchon extérieur (16), le voile (15) et le manchon intérieur (14) forment une unique pièce centrale (30).

9. Collier de maintien (10) selon la revendication 8, **caractérisé en ce que** ladite pièce centrale (30) est en fluorosilicone.

10. Collier de maintien (10) selon la revendication 7 ou 8, **caractérisé en ce que** ladite pièce centrale (30) présente une fente (22) s'étendant depuis l'intérieur du manchon intérieur (14) jusqu'à l'extérieur du manchon extérieur (16).

11. Collier de maintien (10) selon l'une quelconque des revendications précédentes, **caractérisé en ce que** ladite bride (18) est préformée pour épouser sensiblement toute la périphérie extérieure du manchon extérieur (16).

## Claims

1. Supporting collar (10) for an element (8) such as a cable or a pipe, comprising a strap (18) capable of being fixed to a support (12), **characterized in that** it comprises an outer sleeve (16) encircled by this strap (18), an inner sleeve (14) through which said element (8) can pass, and a deformable web (15) connecting said sleeves (14, 16) and allowing the inner sleeve (14) to move relative to the outer sleeve (16), and **in that** this deformable web (15) is formed by two annular membranes (15a, 15b) that come together at the outer sleeve (16) and diverge with distance from the latter.

2. Supporting collar according to Claim 1, **characterized in that** said annular membranes (15a, 15b) extend to form the inner sleeve (14).

3. Supporting collar according to Claim 1, **characterized in that** said annular membranes (15a, 15b) extend to encircle the inner sleeve (14).

4. Supporting collar according to any one of the preceding claims, **characterized in that** it further comprises at least one fastening collar (20) capable of being fastened around the inner sleeve (14).

5. Supporting collar (10) according to any one of the preceding claims, **characterized in that** the web (15) is relaxed when the supporting collar (10) is at rest.

6. Supporting collar (10) according to any one of the preceding claims, **characterized in that** the web (15) is made of an elastic material.

7. Supporting collar (10) according to any one of the preceding claims, **characterized in that** a rib (17) is formed on the outer face of the outer sleeve (16) to house said strap (18).

8. Supporting collar (10) according to any one of the preceding claims, **characterized in that** the outer sleeve (16), the web (15) and the inner sleeve (14) form a single central part (30).

9. Supporting collar (10) according to Claim 8, **characterized in that** said central part (30) is made of fluorosilicone.

10. Supporting collar (10) according to Claim 7 or 8, **characterized in that** said central part (30) has a slit (22) extending from the inside of the inner sleeve (14) to the outside of the outer sleeve (16).

11. Supporting collar (10) according to any one of the preceding claims, **characterized in that** said strap (18) is preformed for snug contact with practically the entire outer circumference of the outer sleeve (16).

## Patentansprüche

1. Halteschelle (10) eines Teils (8) wie eines Kabels oder einer Leitung, umfassend einen Gurt (18), der geeignet ist, auf einem Träger (12) befestigt zu werden, **dadurch gekennzeichnet, daß** sie eine Außenmanschette (16) umfaßt, welche von diesem Gurt (18) umschlossen ist, eine Innenmanschette (14), die geeignet ist, von dem Teil (8) durchquert zu werden, und eine deformierbare Schale (15), welche die Manschetten (14, 16) verbindet und die Bewegung der Innenmanschette (14) im Verhältnis zur Außenmanschette (16) zuläßt, und daß die Schale (15) von zwei Ringmembranen (15a, 15b) gebildet ist, welche auf der Ebene der Außenmanschette vereint sind und welche, indem sie sich von dieser entfernen, auseinander gehen.

2. Halteschelle nach Anspruch 1, **dadurch gekennzeichnet, daß** die Ringmembranen (15a, 15b) sich verlängern, um die Innenmanschette (14) auszubilden.

3. Halteschelle nach Anspruch 1, **dadurch gekennzeichnet, daß** die Ringmembranen (15a, 15b) sich verlängern, indem sie die Innenmanschette (14) umschließen.

4. Halteschelle nach einem der vorhergehenden Ansprüche, **dadurch gekennzeichnet, daß** sie außerdem wenigstens eine Klemmschelle (20) umfaßt, die geeignet ist, um die Innenmanschette (14) festgezurrt zu werden.

5. Halteschelle (10) nach einem der vorhergehenden Ansprüche, **dadurch gekennzeichnet, daß** die Schale (15) entspannt ist, wenn die Halteschelle (10) in Ruhestellung ist.

6. Halteschelle (10) nach einem der vorhergehenden Ansprüche, **dadurch gekennzeichnet, daß** die Schale (15) aus einem elastischen Material ausgeführt ist.

7. Halteschelle (10) nach einem der vorhergehenden Ansprüche, **dadurch gekennzeichnet, daß** eine Nut (17) eingerichtet ist auf der Außenseite der Außenmanschette (16), um den Gurt (18) aufzunehmen.

8. Halteschelle (10) nach einem der Ansprüche 1, 2, 4 bis 7, **dadurch gekennzeichnet, daß** die Außenmanschette (16), die Schale (15) und die Innenmanschette (14) ein einziges zentrales Stück (30) ausbilden.

9. Halteschelle (10) nach Anspruch 8, **dadurch gekennzeichnet, daß** das zentrale Stück (30) aus Fluorsilikon ist.

10. Halteschelle (10) nach Anspruch 7 oder 8, **dadurch gekennzeichnet, daß** das zentrale Stück (30) einen Schlitz (22) aufweist, der sich vom Inneren der Innenmanschette (14) bis zum Äußeren der Außenmanschette (16) erstreckt.

11. Halteschelle (10) nach einem der vorhergehenden Ansprüche, **dadurch gekennzeichnet, daß** der Gurt (18) vorgeformt ist, um sich im wesentlichen dem gesamten Außenumfang der Außenmanschette (16) anzuschmiegen.
